# FASCICULE DE BREVET EUROPEEN

(11) **EP 0 771 742 B1**
(45) Date de publication et mention de la délivrance du brevet: **07.06.2000**
(21) Numéro de dépôt: 96420322.8
(22) Date de dépôt: 31.10.1996
(51) Int. Cl.: B65F 1/10, B02C 19/14

(54) **Conteneur pour la collecte de récipient en verre avec dispositif de fragmentation**
Behälter zum Sammeln von Glasbehältern mit einer Zerkleinerungsvorrichtung
Container for collecting glass containers with crushing device

(30) Priorité: 02.11.1995 FR 9513168
(43) Date de publication de la demande: 07.05.1997
(73) Titulaire: Pitet, Christian, 47000 Agen (FR)
(72) Inventeur: Pitet, Christian, 47000 Agen (FR)
(74) Mandataire: Perrier, Jean-Pierre

(56) Documents cités:
- CH-A- 460 499
- DE-A- 2 040 991
- DE-A- 4 106 284
- DE-U- 8 911 425
- US-A- 4 786 000

## Description

L'invention est relative à un conteneur de collecte des récipients en verre ou équivalents avec un dispositif de fragmentation des récipients en matériau fragmentable, selon le préambule de la revendication 1 (DE-A- 2 040 991).

Ces conteneurs sont en général composés d'une enceinte munie, en partie supérieure d'au moins une ouverture pour le passage d'un récipient, tel que bouteille, bocal ou canette, .... Le toit du conteneur est muni d'un anneau de levage et son fond comporte une trappe verrouillable ou des moyens équivalents pouvant permettre son vidage rapide, lorsqu'il est soulevé.

Les conteneurs actuels ont pour inconvénients d'assurer le stockage de récipients entiers, ce qui conduit à un poids de matière réduit pour un volume important, et entraîne des frais de gestion élevés.

US-A-4786000 décrit un appareil à fragmenter les récipients comportant deux goulottes parallèles et inclinées munies chacune, à leur extémité inférieure, d'un organe d'arrêt du récipient et, au dessus de cette extrémité, d'un percuteur transversal calé sur la tige d'un vérin pneumatique à double effet actionnable par un circuit électrique comprenant un bouton poussoir. Pour son fonctionnement, qui s'effectue à l'arrêt et seulement lorsqu'il est commandé, l'appareil nécessite une installation permanente de production d'air comprimé et une alimentation permanente en courant électrique.

Dans DE-A-2040991, la fragmentation d'un récipient arrêté dans la goulotte inclinée d'un conteneur s'effectue avec l'énergie d'un électro-aimant nécessitant une alimentation et une commande manuelle coup par coup. Il conduit aux mêmes inconvénients que l'appareil ci-dessus.

CH-A-460499, décrit un appareil de fragmentation à usage personnel comportant un percuteur qui, traversant la paroi d'un conteneur de réception du récipient à briser, est actionné par la décompression d'un ressort pouvant, soit être comprimé par une action manuelle provoquant son verrouillage, soit être libéré par une commande manuelle.

Aucun de ces dispositifs ne peut être laissé à disposition du public car il nécessite tous une intervention humaine pour déclencher la fragmentation et, éventuellement, pour être réarmé.

La présente invention a pour objet de fournir un conteneur pour la collecte de récipients verre ou équivalents avec un dispositif de fragmentation fonctionnant automatiquement et de manière autonome.

A cet effet, dans le conteneur selon l'invention le percuteur est disposé au desous de la goulotte et ledit organe est un organe de déclenchement du percuteur réagissant au passage d'un récipient dans la goulotte.

Grâce à cet agencement, lorsqu'un récipient est introduit dans l'ouverture du conteneur, il emprunte la goulotte qui le conduit en direction de l'organe déclenchant le fonctionnement du percuteur. Lorsqu'il parvient sur cet organe, le percuteur entre en action et vient frapper violemment le récipient en déplacement. Cela a pour effet de le fragmenter et d'en réduire le volume.

Dans une forme d'exécution de l'invention, le percuteur est constitué par le prolongement de la tige du piston d'un vérin pneumatique à simple effet, dont le corps est fixé sous la goulotte, ce piston divisant le corps en une chambre inférieure raccordée à un circuit d'air comprimé d'une source autonome, et en une chambre supérieure contenant un ressort hélicoïdal de rappel, tandis que des moyens, calant le percuteur en position rétractée hors de la goulotte, sont reliés à l'organe de déclenchement.

Dans ces conditions, lorsque le récipient agit sur l'organe de déclenchement, celui-ci actionne les moyens de calage dans le sens de la libération du percuteur. Il en résulte que, sous l'action de l'air comprimé contenu dans la chambre inférieure et poussant le piston, le percuteur est déplacé radialement, pénètre dans la goulotte et vient frapper le récipient. Durant ce déplacement, il comprime le ressort de rappel, de sorte que, en fin de mouvement de percussion, le ressort devient prépondérant et ramène automatiquement le piston dans sa position initiale, dans laquelle elle est verrouillée par les moyens de calage.

Avantageusement, le vérin pneumatique est raccordé par un conduit avec détendeur à un réservoir d'air sous pression disposé dans le conteneur, hors de la trajectoire des récipients et fragments.

Ce réservoir contient une quantité d'air suffisante pour assurer le fonctionnement du vérin pneumatique jusqu'au remplissage du conteneur.

Grâce à cet agencement, le conteneur est totalement autonome et peut donc être disposé en n'importe quel lieu, sans avoir à être raccordé à une quelconque source d'énergie. Lorsqu'il est vidé des fragments, il est procédé à la recharge du réservoir.

Le conteneur, selon l'invention, assure une solution intéressante au problème du stockage des récipients en verre, tout en mettant en oeuvre des moyens simples, peu onéreux, et à fonctionnement indépendant.

D'autres caractéristiques et avantages ressortiront de la description qui suit en référence au dessin schématique annexé représentant, à titre d'exemple, une forme d'exécution du conteneur équipé de ce dispositif.
Figure 1 est une vue partielle, en coupe transversale, montrant la partie supérieure d'un conteneur équipé du dispositif selon l'invention,
Figure 2 est une vue partielle de côté, avec coupe transversale, montrant à échelle agrandie le dispositif de fragmentation disposé à l'extrémité inférieure de la goulotte,
Figures 3 et 4 sont des vues partielles en coupe du dispositif de percussion lorsqu'il est, respectivement, en fin de percussion et dans la phase de réarmement.

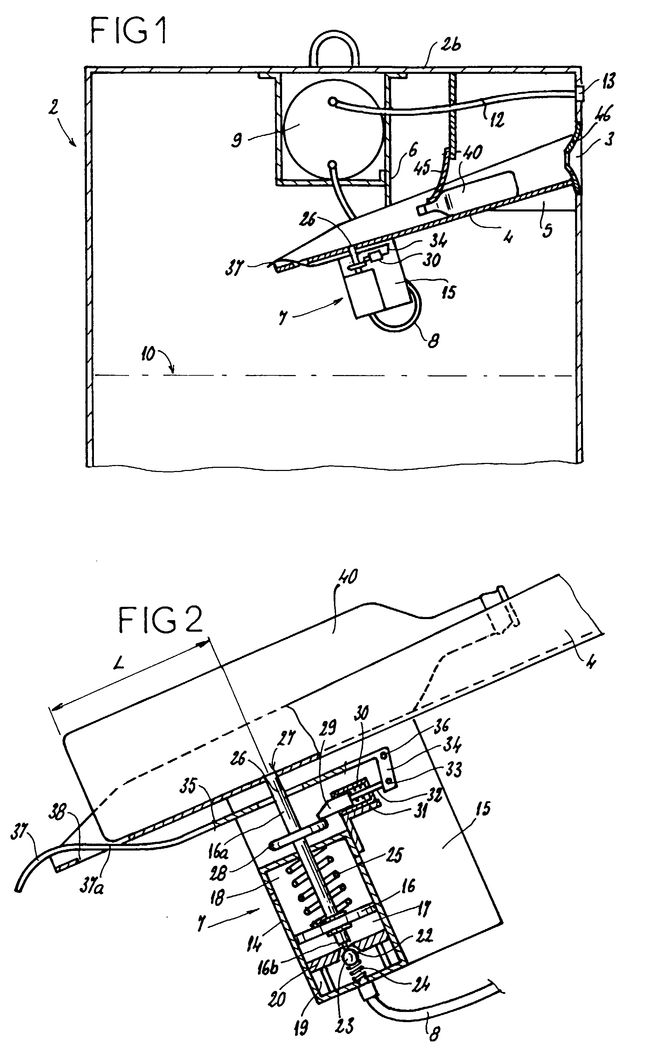

A la figure 1, la référence numérique 2 désigne, de manière générale, un conteneur de section circulaire ou carrée, composé d'une paroi périphérique 2a, d'un toit 2b, et d'un fond non représenté.

Dans la forme d'exécution représentée, ce conteneur ne comporte, en partie supérieure, qu'une seule ouverture 3 pour l'introduction des récipients, mais il peut en comporter plusieurs, chacune étant équipée du dispositif de fragmentation.

Selon l'invention, cette ouverture est prolongée à l'intérieur du conteneur par une goulotte 4 qui est inclinée vers le bas. Cette goulotte est supportée par une console 5, solidaire de la paroi latérale 2a et par un support 6 lié au toit 2b du conteneur.

A proximité de son extrémité libre, la goulotte est munie d'un dispositif de fragmentation composé essentiellement d'un vérin pneumatique à simple effet 7, fixé sous la goulotte et raccordé par un conduit 8, à un réservoir 9 contenant de l'air comprimé. Ce réservoir est disposé hors de la trajectoire des fragments et récipients et par exemple au-dessus de la goulotte, et de la zone de chargement dont la limite supérieure est matérialisée par le trait mixte 10 à la figure 1. Le réservoir 9 est relié par un conduit 12 à un raccord 13, fixé sur la paroi 2a et débouchant à l'extérieur. Ce raccord est doté d'un clapet anti retour ou d'une vanne d'arrêt.

Comme le montre plus en détails la figure 2, le corps 14 du vérin 7 est fixé sur la goulotte 4 par des consoles 15. Le piston 16 divise ce corps 14 en une chambre inférieure 17 et en une chambre supérieure 18. La chambre inférieure 17 est alimentée par le conduit 8, par l'intermédiaire d'une chambre d'alimentation 19 dont elle est séparée par une paroi 20 comportant un conduit axial 22 conformé en siège. Ce siège est destiné à recevoir un clapet dont la bille 23 est sollicitée par un ressort 24 dans le sens de la fermeture de l'alimentation de la chambre 17.

La chambre 18 contient un ressort hélicoïdal de rappel 25.

L'extrémité libre extérieure de la tige 16a du piston 16 constitue le percuteur 26 du dispositif de fragmentation. Ce percuteur traverse le fond de la goulotte par une ouverture 27. En position de repos, et comme montré à la figure 2, son extrémité libre affleure le fond de la goulotte mais ne dépasse pas de celle-ci. Cette position de repos est définie par des moyens de calage qui comprennent une collerette 28 fixée sur la tige 16a et une fourchette 29 montée coulissante dans un support fixe 30 porté par le corps 14 du vérin. Un ressort de rappel 31, disposé entre la fourchette 29 et le fond du support 30, rappelle constamment cette fourchette en direction du percuteur. Cette fourchette est également solidaire d'une queue de commande 32 qui traverse le fond du support 30 et dont l'extrémité libre est attelée en 33 sur le coude 34 d'un levier 35 constituant organe de déclenchement. Ce levier est articulé, à proximité de son coude, autour d'un axe 36, disposé transversalement sous la goulotte.

Le levier 35 est coudé de manière que son extrémité libre, contrecoudée en 37 pour former une palette, passe à travers une ouverture 38 du fond de la goulotte. Cette ouverture est disposée en aval par rapport à l'ouverture 27 pour le percuteur.

La distance L entre l'axe longitudinal du percuteur 26 et le point 37a de la palette 37 avec lequel le récipient 40 vient en contact est compris entre 8 cm et 17 cm, de manière que le percuteur frappe le récipient sensiblement au milieu de la longueur d'une bouteille de 75 cl ou d'un litre.

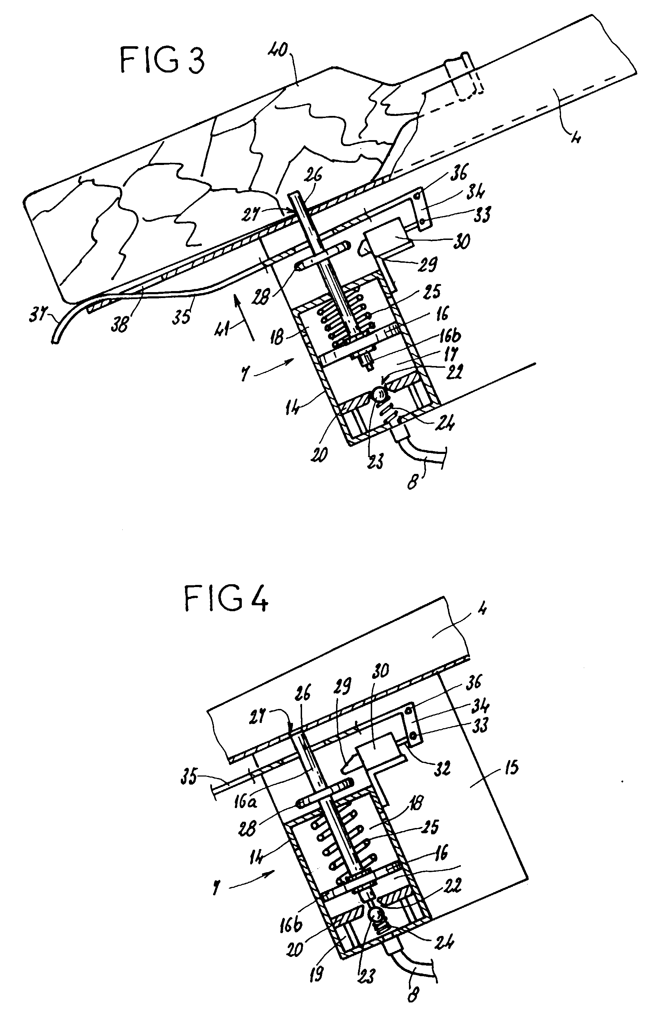

Lorsqu'un récipient 40 est introduit dans l'ouverture 3 du conteneur, il emprunte la goulotte 4 et descend par gravité jusqu'à proximité de son extrémité inférieure. Dès qu'il rencontre la palette 37, il abaisse celle-ci et provoque le pivotement du levier 35 autour de son articulation 36. Cela a pour conséquence de rétracter la fourchette 29 et de libérer la collerette 28. Sous la poussée de l'air comprimé emprisonné dans la chambre 17, le piston 16 est déplacé instantanément dans le sens de la flèche 41 de figure 3. Son extrémité formant percuteur 26 vient ainsi percuter violemment le récipient 40 en provoquant sa fragmentation.

A la fin de ce mouvement, le ressort 25, qui a été comprimé, se détend et tend à déplacer le piston 16 dans le sens inverse en provoquant la rétraction du percuteur 26. Pendant ce mouvement, un poussoir 16b, prolongeant la tige 16a du piston 16 dans la chambre inférieure 17, vient en contact avec la bille 23 pour l'éloigner de son siège 22, comme montré à la figure 4. Cela a pour effet de permettre à l'air comprimé contenu dans la chambre d'alimentation 19 de pénétrer dans la chambre inférieure 17. Progressivement, l'air comprimé pénétrant dans la chambre 17, redéplace le piston 16 dans le sens de la flèche 41, ce qui a pour effet de déplacer également le poussoir 16b. Ce déplacement s'arrête lorsque la bille 23, rappelée par son ressort 24, revient en contact avec le siège 22 et interrompt l'alimentation de la chambre 17 en air comprimé.

Il ressort de ce qui précède que, grâce à sa structure interne, le vérin 7 a un fonctionnement entièrement automatique, et ne nécessite aucune vanne de distribution pour contrôler son alimentation.

Il faut préciser que, en raison de sa structure particulière, le dispositif de fragmentation est sans effet sur les assiettes, en général en faïence ou en porcelaine, donc incompatible avec le verre, car ces assiettes ne pénètrent pas dans la goulotte mais glissent sur elles, et ne peuvent donc pas actionner la palette 37. Il ne fonctionne pas non plus avec les canettes de bière de 25 ou 33 cl, moins volumineuses car, en raison de la distance L entre la palette et le percuteur, le percuteur vient frapper au niveau du goulot et éjecte les canettes sans les fragmenter.

Quant aux boîtes en fer blanc ou en aluminium, du type de celles utilisées pour les sodas, et aux bouteilles ou boîtes en matière synthétique qui peuvent circuler dans la goulotte 4, elles sont éjectées par le percuteur et non brisées, ce qui permet de les évacuer plus facilement après collecte du contenu du conteneur.

Le réservoir 9 contient un volume d'air suffisant pour assurer le fonctionnement du vérin jusqu'au remplissage du conteneur. Il est rechargé lors des opérations de vidage du conteneur. Dans une forme de réalisation et pour limiter le volume du réservoir tout en procurant une réserve d'air suffisante, ce réservoir est alimenté en air comprimé à 10 bars et le conduit 8 le reliant au vérin 7 est muni d'un détendeur ramenant la pression à 3 bars et d'un filtre déshumidificateur.

Pour protéger la personne déposant les récipients dans la goulotte contre toute projection, une bavette 45, est fixée à l'intérieur du conteneur, entre la zone de fragmentation et l'ouverture 3, elle-même munie de volets élastiques 46. L'intervalle entre les volets 46 et la bavette est supérieure à la longueur d'une bouteille de manière que ces moyens forment un sas acoustique limitant la propagation par l'ouverture 3 des bruits provenant de la fragmentation.

Un autre avantage de ce dispositif est qu'en réduisant le volume des récipients, il diminue les bruits de chocs consécutifs à la chute dans le conteneur et rend la collecte moins perturbante pour le voisinage. De plus, la fragmentation des récipients s'effectue dans un volume réduit qui peut, très facilement et à faible coût, être insonorisé, pour réduire, à la source, les émissions bruyantes.

Selon l'environnement, ce conteneur est posé sur le sol ou engagé au moins partiellement, dans une fosse.

## Revendications

1. Conteneur pour la collecte de récipients en verre ou équivalents avec un dispositif de fragmentation, dans lequel, d'une part, au moins l'une des ouvertures (3) d'accès du conteneur est prolongée vers l'intérieur et le bas par une goulotte (4) de réception des récipients et, d'autre part, les moyens de fragmentation comprennent un percuteur (26) déplaçable transversalement à la trajectoire des récipients (40) dans la goulotte, entre une position de dégagement et une position de percussion, et des moyens de déclenchement du percuteur, le percuteur étant disposé dans l'alignement d'une ouverture (27) ménagée dans cette goulotte et en amont d'une autre ouverture (38) qui, ménagée dans la même goulotte, est traversée par un organe (35, 37), **caractérisé en ce que** le percuteur (26) est disposé au-dessous de la goulotte (4), et que ledit organe est un organe de déclenchement du percuteur (26) et réagissant au passage d'un récipient (40) dans la goulotte (4).

2. Conteneur selon la revendication 1, **caractérisé en ce que** le percuteur (26) est constitué par le prolongement (16a) de la tige du piston (16) d'un vérin pneumatique (7) à simple effet, dont le corps (14) est fixé sous la goulotte (4), ce piston divisant le corps en une chambre inférieure (17), raccordée à un circuit d'air comprimé (8) d'une source autonome (9), et en une chambre supérieure (18) contenant un ressort hélicoïdal de rappel (25), tandis que des moyens (28 à 34) calant le percuteur en position rétractée hors de la goulotte, sont reliés à l'organe de déclenchement (35 à 37).

3. Conteneur selon la revendication 2, **caractérisé en ce que** la chambre inférieure (17) du vérin pneumatique (7) est alimentée en air comprimé par un conduit axial (22) qui, la faisant communiquer avec une chambre d'alimentation (19), est conformé en siège pour un clapet à bille (23, 24) disposé dans la chambre d'alimentation, tandis que la tige du piston (16) se prolonge dans la chambre inférieure (17) pour former doigt d'ouverture du clapet à bille (23, 24).

4. Conteneur selon l'une quelconque des revendications 1 à 3, **caractérisé en ce que** l'organe de déclenchement est constitué par un levier (35) s'étendant longitudinalement sous la goulotte (4) et dont une extrémité est articulée sous cette goulotte, tandis que son autre extrémité est coudée vers le haut pour passer dans l'ouverture aval (38) de la goulotte (4) et est contrecoudée pour former une palette (37) de contact avec le récipient (40) circulant dans la goulotte.

5. Conteneur selon la revendication 4, **caractérisé en ce que** le percuteur (16a) est muni, sous la goulotte, d'une collerette (28) coopérant avec une fourchette (29) à rappel par ressort (31), cette fourchette étant montée coulissante dans un support fixe (30) et comportant une queue de commande (32) dont l'extrémité est attelée à l'extrémité d'un coude (34) solidaire de l'extrémité articulée du levier (35).

6. Conteneur selon l'une quelconque des revendications 3 à 5, **caractérisé en ce que** le conduit (8) raccorde la chambre d'alimentation (19) du vérin (7) à un réservoir (9) d'air sous pression disposé dans le conteneur, hors de la trajectoire des récipients et fragments, et ce conduit comporte un détendeur.

7. Conteneur selon la revendication 6, **caractérisé en ce que** le réservoir (9) d'air sous pression est relié par un conduit (12) à un raccord (13) avec moyen d'arrêt, pour sa recharge en air comprimé.

8. Conteneur selon l'une quelconque des revendications 1 à 5, **caractérisé en ce que** la distance (L) entre l'axe longitudinal du percuteur et le point de contact du récipient avec l'organe d'actionnement est compris entre 8 cm et 17 cm.

## Patentansprüche

1. Container zum Sammeln von Glasbehältern o.dgl. mit einer Zerkleinerungsvorrichtung, wobei einerseits wenigstens eine der Zugangsöffnungen (3) des Containers nach innen und unten durch eine Rutsche (4) zur Aufnahme der Behälter verlängert ist, und wobei andererseits die Zerkleinerungsmittel einen Schlagbolzen (26) umfassen, der quer zur Bahn der Behälter (40) auf der Rutsche zwischen einer Außer-Eingriff-Stellung und einer Schlagstellung verlagerbar ist, und sie ferner Mittel zum Auslösen des Schlagbolzens umfassen, wobei der Schlagbolzen fluchtend in einer Öffnung (27) angeordnet ist, die in dieser Rutsche und stromaufwärts einer anderen Öffnung (38) vorgesehen ist, welche in der gleichen Rutsche vorgesehen ist und von einer Einrichtung (35, 37) durchsetzt wird, dadurch gekennzeichnet, daß der Schlagbolzen (26) unter der Rutsche (4) angeordnet ist und daß die Einrichtung eine Einrichtung zum Auslösen des Schlagbolzens (26) ist, die auf das Vorbeirutschen eines Behälters (40) auf der Rutsche (4) reagiert.

2. Container nach Anspruch 1, dadurch gekennzeichnet, daß der Schlagbolzen (26) durch die Verlängerung (16a) der Stange eines Kolbens (16) eines einfach wirkenden pneumatischen Zylinders (7) gebildet ist, dessen Gehäuse 114) unter der Rutsche (4) befestigt ist, wobei dieser Kolben das Gehäuse aufteilt in eine untere Kammer (17), die an einen Druckluftkreis (8) einer unabhängigen Quelle (9) angeschlossen ist, und eine obere Kammer (18), die eine Rückstell-Schraubenfeder (25) enthält, wohingegen Mittel (28 - 34) zum Feststellen des Schlagbolzens in eingezogener Stellung außerhalb der Rutsche mit der Auslöseeinrichtung (35 - 37) verbunden sind.

3. Container nach Anspruch 2, dadurch gekennzeichnet, daß die untere Kammer (17) des pneumatischen Zylinders (7) durch eine axiale Leitung (22) mit Druckluft versorgt wird, welche Leitung sie mit einer Versorgungskammer (19) in Verbindung bringt und als Sitz für ein in der Versorgungskammer angeordnetes Kugel-Rückschlagventil (23, 24) gebildet ist, wohingegen sich die Stange des Kolbens (16) in die untere Kammer (17) hinein fortsetzt, um einen Öffnungsfinger für das Kugel-Rückschlagventil (23, 24) zu bilden.

4. Container nach einem der Ansprüche 1 bis 3, dadurch gekennzeichnet, daß die Auslöseeinrichtung durch einen Hebel (35) gebildet ist, der sich unter der Rutsche (4) in Längsrichtung erstreckt und dessen eines Ende unter dieser Rutsche angelenkt ist, wohingegen sein anderes Ende nach oben abgewinkelt ist, um in eine stromabwärtige Öffnung (38) der Rutsche (4) hineinzugelangen, und entgegengesetzt abgewinkelt ist, um eine Fahne (37) zum Kontakt mit dem in der Rutsche rutschenden Behälter (40) zu bilden.

5. Container nach Anspruch 4, dadurch gekennzeichnet, daß der Schlagbolzen (16a) unter der Rutsche mit einem Kragen (28) ausgestattet ist, der mit einer durch eine Feder (31) rückstellbaren Gabel (29) zusammenwirkt, wobei diese Gabel verschiebbar in einer festen Lagerung (30) angebracht ist und einen Steuerstab (32) umfaßt, dessen Ende an das Ende eines Winkels (34) gekuppelt ist, der mit dem angelenkten Ende des Hebels (35) verbunden ist.

6. Container nach einem der Ansprüche 3 bis 5, dadurch gekennzeichnet, daß die Leitung (8) die Versorgungskammer (19) des Zylinders (7) mit einem Druckluftgefäß (9) verbindet, das im Container außerhalb der Bahn der Behälter und der zerkleinerten Stücke angeordnet ist, und daß diese Leitung einen Druckminderer umfaßt.

7. Container nach Anspruch 6, dadurch gekennzeichnet, daß das Druckluftgefäß (9) für sein Auffüllen mit Druckluft mittels einer Leitung (12) an einen Anschluß (13) mit einer Absperrvorrichtung verbunden ist.

8. Container nach einem der Ansprüche 1 bis 5, dadurch gekennzeichnet, daß der Abstand (L) zwischen der Längsachse des Schlagbolzens und dem Kontaktpunkt des Behälters mit der Betätigungseinrichtung zwischen 8 cm und 17 cm enthalten ist.

## Claims

1. Container for collecting glass receptacles or the like with a breaking-up device, in which, on the one hand, at least one of the access openings (3) of the container is extended inwardly and downwardly by a chute (4) for receiving the receptacles and on the other hand, the breaking-up means comprise a striker (26) displaceable transversely to the path of the receptacles (40) in the chute, between a disengaged position and a striking position, and means for triggering the striker, the striker being arranged in alignment with an opening (27) formed in this chute and upstream of another opening (38) which, formed in the same chute, is traversed by a member (35, 37), characterized in that the striker (26) is arranged below the chute (4) and in that the said member is a member for triggering the striker (26) and reacts on the passage of a receptacle (40) in the chute (4).

2. Container according to Claim 1, characterized in that the striker (26) is formed by the extension (16a) of the rod of the piston (16) of a single-acting pneumatic cylinder (7), the body (14) of which is fixed under the chute (4), this piston dividing the body into a lower chamber (17) connected to a circuit (8) of compressed air from an autonomous source (9), and into an upper chamber (18) containing a helical return spring (25), while means (28 to 34) which lock the striker in the retracted position outside the chute are connected to the triggering member (35 to 37).

3. Container according to Claim 2, characterized in that the lower chamber (17) of the pneumatic cylinder (7) is supplied with compressed air via an axial conduit (22) which connects the lower chamber with a supply chamber (19) and is shaped as a seat for a ball valve (23, 24) arranged in the supply chamber, while the rod of the piston (16) extends into the lower chamber (17) to form a finger for opening the ball valve (23, 24).

4. Container according to any one of Claims 1 to 3, characterized in that the triggering member is formed by a lever (35) which extends longitudinally under the chute (4) and one end of which is articulated under this chute, while its other end is bent upwardly to pass through the downstream opening (38) of the chute (4) and is bent in the opposite direction to form a blade (37) for contact with the receptacle (40) moving in the chute.

5. Container according to Claim 4, characterized in that the striker (16a) is provided, under the chute, with a collar (28) cooperating with a fork (29) returned by spring (31), this fork being mounted slidably in a fixed support (30) and including a control stem (32), the end of which is coupled to the end of a bend (34) integral with the articulated end of the lever (35).

6. Container according to any one of Claims 3 to 5, characterized in that the conduit (8) connects the supply chamber (19) of the cylinder (7) to a reservoir (9) of air under pressure arranged in the container, outside the path of the receptacles and fragments, and this conduit includes a pressure reducer.

7. Container according to claim 6, characterized in that the reservoir (9) of air under pressure is connected by a conduit (12) to a connector (13) with stop means, for recharging it with compressed air.

8. Container according to any one of Claims 1 to 5, characterized in that the distance (L) between the longitudinal axis of the striker and the point of contact of the receptacle with the actuating member is between 8 cm and 17 cm.
